Europäisches Patentamt

European Patent Office

Office européen des brevets

(11) Numéro de publication: **0 102 903**
A2

# (12) DEMANDE DE BREVET EUROPEEN

(21) Numéro de dépôt: **83401733.7**

(22) Date de dépôt: **01.09.83**

(51) Int. Cl.³: **C 04 B 43/12**
C 08 J 9/00, C 08 L 61/10

(30) Priorité: **07.09.82 FR 8215395**

(43) Date de publication de la demande:
**14.03.84 Bulletin 84/11**

(84) Etats contractants désignés:
**AT BE CH DE GB IT LI LU NL SE**

(71) Demandeur: **Jeanlaurent, Jean-Pierre**
**875 avenue Villeneuve d'Angoulême**
**F-34100 Montpellier(FR)**

(72) Inventeur: **Jeanlaurent, Jean-Pierre**
**875 avenue Villeneuve d'Angoulême**
**F-34100 Montpellier(FR)**

(74) Mandataire: **Ecal, François**
**4, rue Fabrégat**
**F-34500 Béziers(FR)**

(54) Matériau isolant ignifuge, son procédé de fabrication et produits fabriqués selon ce procédé.

(57) Matériau léger, ignifuge, isolant et présentant de bonnes qualités de résistance mécanique, obtenu à partir de la résine formophénolique expansée.

L'invention porte sur le fait qu'un granulat fibreux et absorbant, tel que, par exemple, la partie solide de la rafle de maïs séchée et concassée, est brassée avec la résine formophénolique avant son expansion, la masse obtenue étant polymérisée selon la forme désirée, ladite masse solide agglomérée ainsi obtenue pouvant aussi être concassée pour réaliser un granulat libre.

L'invention peut être utilisée pour réaliser des panneaux rigides, légers, isolants et ignifuges, ou des granulats imprégnés pouvant être introduits dans des bétons ou servir de remplissage.

# MATERIAU ISOLANT IGNIFUGE , SON PROCEDE DE FABRICATION ET PRODUITS FABRIQUES SELON CE PROCEDE .

La présente invention a pour objet un matériau léger, isolant, essentiellement ignifuge, permettant la fabrication de panneaux rigides autoporteurs capables d'être utilisés dans le bâtiment, soit comme cloisons, soit comme revêtements de parois existantes, ou dans l'industrie pour la fabrication d'objets de formes définies de faible densité, bien que de résistance élevée .

La résine formophénolique expansée est connue comme présentant une faible densité ainsi que des qualités ignifuges élevées en même temps qu'une bonne isolation . Elle est en effet parfaitement incombustible , se carbonisant sans la moindre flamme ni sans présenter le risque de propagation de la combustion, ce matériau étant infusible . En outre sa carbonisation ne produit aucun gaz toxique ni aucune fumée noire . Il présente aussi une grande stabilité dans le temps et une parfaite inertie aux agents chimiques , ainsi qu'une insensibilité aux micro-organismes . Son intérêt est donc grand dans le cadre du but recherché, mais cette résine expansée présente le grave inconvénient de posséder de très faibles qualités mécaniques .

En effet les panneaux ainsi constitués, selon les procédés connus, présentent une extrème fragilité , la mousse ainsi formée présentant une très faible cohésion intercellulaire , de sorte que ce matériau peut difficilement être manipulé étant très cassant , pulvérulant sous le moindre frottement et très peu résistant au poinçonnage . De plus, s'il présente de bonnes qualités d'isolation thermique , il n'en est pas de même sur le plan de l'isolation phonique sur lequel il constitue un isolant médiocre .

La présente invention a donc pour but , en utilisant les qualités essentielles de ce matériau , d'éviter les inconvénients qu'il présente . Pour cela la résine formophénolique , avec les qualités qui lui sont propres , est incorporée dans une structure qui lui confère les qualités mécaniques nécessaires pour résister au poinçonnage, au flambage et au cisaillement , sans accroître sensiblement sa densité, ce nouveau matériau se trouvant présenter des qualités d'isolation phonique supérieures sans rien enlever aux qualités essentielles de la résine . En outre les éléments ainsi associés à la résine formophénolique se trouvent issus d'un matériau bon marché qui, malgrè les manipulations nécessaires pour sa mise en œuvre , permet

2

l'obtention d'un matériau définitif composite d'un prix de revient inférieur au prix de revient de la résine précédemment employée pure.

Selon la présente invention , le mélange de résine. formophénolique avec le catalyseur et l'agent d'expansion est mis en présence d'un granulat d'un matériau solide fibreux et absorbant, dont les grains s'imprègnent de résine et sont liés par elle , l'ensemble, après polymérisation formant une masse solide , bien qu'hétérogène, qui présente les qualités mécaniques du matériau imprégné ainsi que les qualités d'isolation thermiques de la résine qui forme le liant et qui confère à l'ensemble son caractère incombustible. Un tel matériau peut se trouver polymérisé sous forme de plaques utilisables directement , selon leur épaisseur , soit comme parois verticales, soit comme revêtement d'une paroi existante . Et le caractère hétérogène du produit ainsi obtenu permet , selon la nature du granulat employé , d'obtenir des possibilités importantes d'isolation phonique .

Un tel matériau peut aussi être utilisé pour produire par moulage des objets de formes et de volumes divers qui présenteront les mêmes caractéristiques avantageuses mécaniques et physiques .

De même la résine imprégnant ainsi le granulat peut être polymérisée sans que se produise l'agglomération des différents grains entre eux . Un tel granulat, rendu ignifuge peut être alors incorporé aux liants normaux employés dans le bâtiment , tels que le ciment ou le plâtre , pour former des bétons ignifuges , légers, et isolants.

Un tel granulat ainsi ignifugé peut être aussi utilisé en remplissage entre deux cloisons de la même manière que le mica expansé connu sous le nom de vermiculite .

A titre d'exemple, le granulat absorbant ainsi utilisé peut être obtenu à partir de la rafle de maïs séchée et concassée pour former des grains dont la dimension optima a été constatée être de 5 mm environ , pour assurer le meilleur rapport charge/résine . La rafle de maïs séchée , concassée et calibrée a été spécialement choisie pour son pouvoir absorbant en même temps que pour sa faible densité et son prix de revient particulièrement bas , puisqu'il s'agit d'un déchet sans valeur de la culture du maïs .

Le granulat pourrait cependant être constitué par tout autre matériau présentant une ou plusieurs de ces caractéristiques .

C'est ainsi que pour certaines applications le granulat peut être constitué par de menus tronçons de jonc formé de fibres de verre frittées, pour obtenir un produit semblable , dont cependant la densité se trouverait plus élevée .

Le mode de fabrication du produit fini comporte les phases successives suivantes :

1°) - Un catalyseur , tel qu'une solution aqueuse de l'acide orthoparatoluène sulfonique , est mélangé à la résine formophénolique dans la proportion de 8 à 10% du poids de la résine .

2°) - Un agent d'expansion , tel que le trichloro-trifluoroéthane , est introduit dans la solution précédente dans la proportion de 6 à 8% .

3°) - Le granulat , obtenu par exemple par le concassage de la partie dure de la rafle de maïs triée, calibrée et dépoussiérée, est brassé à froid pour éviter la polymérisation , dans un malaxeur dans lequel est introduit le mélange précédent émulsionné , dans la proportion de 1 litre de résine ainsi traitée pour 17 litres de granulat calibré à 5 mm environ .

4°) - Le brassage est entretenu jusqu'à absorption complète de l'émulsion par le granulat , ce qui est obtenu lorsque celui-ci a absorbé 4 à 5 fois son poids.

5°) - Le mélange ainsi obtenu est versé dans les moules et tassé par vibrations avant que les moules reçoivent un couvercle et soient introduits dans une étuve à 70° C où ils sont maintenus une 1/2 heure environ pour obtenir l'expansion de la résine qui comble ainsi parfaitement les vides intergranulaires , et pour obtenir la polymérisation qui assure la cohésion de l'ensemble .

Après démoulage on obtient un matériau léger ( sa densité variant de 280 à 590 Kg/m3 suivant le pourcentage de charge ) , solide, rigide, présentant une bonne résistance à l'écrasement. ainsi qu'à la flexion et au cisaillement. ce matériau présentant aussi les qualités propres à la résine formophénolique, à savoir : son caractère ignifuge et ses qualités d'isolation thermique , qui sont complétées par les caractéristiques d'isolation phonique dûes à l'hétérogénéité du matériau ainsi constitué .

Une telle méthode peut être appliquée pour obtenir des objets de formes diverses et en particulier pour obtenir des panneaux présentant une bonne résistance mécanique et dont la conductivité thermique reste faible ayant été constatée à environ 0,037 W/m/°C pour un panneau de 40 mm d'épaisseur .

L'objet ainsi obtenu, et particulièrement les panneaux iso-

4

lants ainsi fabriqués, peuvent être revêtus sur l'une des faces , ou sur chacune d'elles, d'une couche de résine phénolique stratifiée armée , appliquée par tout moyen connu , tel que par projection d'un amalgame de résine et de fibres de verre .

A noter que ce revêtement de résine armée peut être prévu garnissant avant moulage les parois du moule, de façon à former un produit fini dès son démoulage après le passage à l'étuve .

Les panneaux ainsi fabriqués , outre les qualités d'isolation thermique et d'ininflammabilité dûes à la présence de la résine formophénolique totalement ininflammable et infusible , présentent aussi de réelles qualités d'isolant phonique , que ce soit à l'égard des ondes acoustiques se propageant par voie aérienne ou engendrées par un choc, cette propriété étant dûe à l'hétérogénéité du complexe ainsi réalisé . C'est ainsi que l'on constate un affaiblissement de 40 Db pour une épaisseur de 60 mm .

De même la résistance mécanique est due à l'imprégnation par la résine polymérisée du granulat que contient ce nouveau matériau .

A titre d'exemple : pour une densité de 480 Kg/m3 on a constaté une résistance de 6,50 Kg/mm2 à la compression , de 5,80 Kg/mm2 au cisaillement , à la traction et au poinçonnement et de 10,8 Kg/mm2 à la flexion .

Son inertie chimique est celle des résines formophénoliques qui noient et imprègnent le granulat .

Enfin on remarque que, comme dans le cas de la résine formophénolique pure, sa carbonisation ne provoque aucune fusion ni aucune émanation de gaz ni de fumées toxiques .

Et son absorption d'humidité est si faible qu'il présente aussi une haute résistance aux micro-organismes et ne favorise pas la prolifération micosique . Son taux d'absorption de l'eau est de 6% en volume après 1 mois d'immersion et sans déformation .

Les masses de matériau polymérisé ainsi réalisées peuvent être concassées pour obtenir un granulé imprégné qui peut être utilisé soit comme charge dans des bétons de ciment ou de plâtre présentant les caractéristiques propres à ces liants , soit comme garnissage ou remplissage de tout volume que l'on désire rendre isolant .

Dans ce cas, pour faciliter l'obtention de la masse destinée à être concassée , de l'eau est incorporée dans la résine formophénolique dans la proportion de 2 parties d'eau pour 3 parties de résine , ce mélange recevant le catalyseur dans la proportion de 25% du poids de résine . Puis ce mélange est brassé durant 30 minutes avec le granulat absorbant , dans la proportion de 1 litre de mélange pour 17 litres de granulat . La masse ainsi obtenue est chauffée à 70° C durant une 1/2 heure ce qui permet d'obtenir une masse polymérisée contenant le granulat , qui est alors concassée pour récupérer les grains isolément , qui pourront ainsi être incorporés aux matériaux de construction traditionnels ( plâtre ou ciment ) pour former des éléments de construction de formes traditionnelles , mais présentant les qualités exceptionnelles conférées par les granulats ainsi préparés .

Les opérations de formages des panneaux ci-dessus décrits peuvent être menées mécaniquement de façon automatique . Pour cela le mélange de granulat est déversé, à la sortie du malaxeur , en épaisseur constante, sur une table mobile constituée par une chaîne sans fin formée par des éléments plans juxtaposés de métal inoxydable ou revêtus d'une nappe de fibres de verre imprégnées de tétrafluoroéthylène , ladite table mobile entraînant la nappe formée par le mélange qu'elle supporte à travers un four continu destiné à fournir les calories nécessaires pour la polymérisation du produit .

Les fours ou étuves ainsi utilisés , du type continu ou non , seront de préférence du type à micro-ondes de façon à chauffer la matière à cœur, car, du fait même des caractéristiques élevées d'isolation thermique de la résine employée, les calories se propageraient difficilement au sein de la matière en vue de sa polymérisation si les calories, provenant d'une source extérieure, étaient reçues au niveau des faces externes de l'objet traité.

Il est bien entendu que l'invention n'est pas limitée à l'exemple ou aux exemples qui en ont été donnés , toute variante considérée comme équivalence ne pouvant en modifier la portée .

La présente invention peut être utilisée pour la fabrication de panneaux autoporteurs présentant des qualités d'isolation phonique et thermique importantes , en même temps qu'une ininflammabilité totale .

REVENDICATIONS

1°) - Matériau isolant ignifuge ,

Caractérisé par le fait que la résine formophénolique expansée utilisée comme liant est brassée en présence d'un matériau solide , rigide, léger , fibreux et absorbant , divisé à l'état de granulat , ladite résine étant ensuite polymérisée pour être utilisée soit directement sous la forme d'objets finis tels que panneaux , soit après concassage de la masse ainsi réalisée pour former un granulat enrobé utilisable dans des bétons de ciment ou de plâtre .

2°) - Matériau selon la revendication 1,

Caractérisé par le fait que le matériau solide , rigide, léger, fibreux et absorbant , brassé avec la résine formophénolique expansée est la partie solide de la rafle de maïs séchée , concassée et dépoussiérée .

3°) - Matériau selon la revendication 2 ,

Caractérisé par le fait que la rafle de maïs séchée, concassée et dépoussiérée est calibrée pour former un granulat présentant des grains uniformes de 5 mm environ .

4°) - Matériau selon la revendication 1,

Caractérisé par le fait que le matériau solide, rigide , léger, fibreux et absorbant , brassé avec la résine formophénolique expansée est constitué par de menus tronçons de jonc de fibres de verre associées et frittées.

5°) - Procédé de fabrication du matériau conforme aux revendications précédentes,

Caractérisé par le fait que la résine formophénolique , mélangée à raison de 8 à 10% de son poids avec un catalyseur tel que l'acide orthoparatoluène sulfonique et à raison de 6 à 8% avec un agent d'expansion tel que le trichloro - trifluoroéthane , est brassée , à froid pour éviter sa polymérisation , dans un malaxeur avec le granulat absorbant introduit dans la proportion de 17 litres pour 1 litre de résine traitée, le brassage s'effectuant jusqu'à absorption complète de la résine par le granulat qui est alors versé dans les moules adéquats où il est tassé et enfermé pour être porté dans une étuve à 70° C , où il est maintenu pendant une demi-heure, après quoi le matériau se présente sous la forme d'un corps solide , rigide, homogène, la résine absorbée par le granulat ayant comblé les vides intercellulaires au cours de son expansion avant sa polymérisation .

6°) - Procédé de fabrication du matériau conforme aux revendications 3 ou 4 ,

Caractérisé par le fait que la résine formophénolique est diluée avec de l'eau dans la proportion de 2 parties d'eau pour 3 parties de résine , et mélangée avec un catalyseur dans la proportion de 25% du poids de résine , puis brassée dans un malaxeur avec le granulat absorbant dans la proportion de 17 litres de granulat pour 1 litre de résine ainsi traitée, le brassage s'effectuant durant 30 minutes, la masse ainsi obtenue étant portée ensuite à 70°C pendant 30 minutes pour former une masse polymérisée , non expansée , qui est concassée pour séparer les granulats enrobés utilisables dans des bétons .

7°) - Procédé de fabrication du matériau conforme aux revendications 5 ou 6 ,

Caractérisé par le fait que la masse de granulat enrobée par la résine formophénolique non encore polymérisée est chauffée de préférence au moyen du procédé de micro-ondes afin d'obtenir un chauffage homogène au cœur même de la matière .

8°) - Procédé de fabrication selon la revendication 7,

Caractérisé par le fait que le granulat imprégné de résine formophénolique est porté dans le four de polymérisation par une chaîne continue formée de panneaux juxtaposés de métal inoxydable .

9°) - Procédé de fabrication selon la revendication 7,

Caractérisé par le fait que le granulat imprégné de résine formophénolique est porté dans le four de polymérisation par un tapis continu fait d'un tissu de fibres de verre enrobées de tétrafluoroéthylène .

10°) - Produit obtenu à l'aide du procédé conforme à la revendication 5,

Caractérisé par le fait qu'il se présente sous la forme d'une masse, de forme diverse ,constituée par l'agglomération dans la résine formophénolique polymérisée et expansée de granulats solides imprégnés de ladite résine .

11°) - Produit selon le procédé conforme à la revendication 10,

Caractérisé par le fait qu'il est revêtu en surface d'une pellicule de résine formophénolique non expansée, chargée de fibres de verre et teintée.

8

12°) - Produit obtenu à l'aide du procédé conforme à la revendication 6,

Caractérisé par le fait qu'il se présente sous la forme de grains solides séparés imprégnés de résine formophénolique polymérisée et expansée , obtenus par le concassage des blocs réalisés en cours de polymérisation .


Pour : Jean-Pierre JEANLAURENT
Le mandataire : François ECAL